# EUROPÄISCHE PATENTSCHRIFT

(11) **EP 2 662 670 B1**
(45) Veröffentlichungstag und Bekanntmachung des Hinweises auf die Patenterteilung: **09.11.2016**
(21) Anmeldenummer: 13001841.9
(22) Anmeldetag: 09.04.2013
(51) Int. Cl.: G01F 1/684, G01F 1/74

(54) **STRÖMUNGSSENSOR**
FLOW SENSOR
CAPTEUR D'ÉCOULEMENT

(30) Priorität: 11.05.2012 DE 102012009421
(43) Veröffentlichungstag der Anmeldung: 13.11.2013
(73) Patentinhaber: E+E Elektronik Ges.m.b.H., 4209 Engerwitzdorf (AT)
(72) Erfinder: Gaal, Martin, A-9500 Villach (AT); Rohm, Mathias, A-4040 Pöstlingberg (AT); Polly, Stefan, A-4273 Unterweißenbach (AT); Niessner, Georg, A-4223 Katzdorf (AT)
(74) Vertreter: Hofmann, Ernst

(56) Entgegenhaltungen:
- DE-A1- 19 941 330
- DE-A1-102007 055 779

## Beschreibung

Die vorliegende Erfindung betrifft einen Strömungssensor, der zur direkten Messung von Massenströmungen, vorzugsweise von Luft oder anderen Gasen, geeignet ist.

Strömungssensoren werden üblicherweise in Anwendungen eingesetzt, bei denen eine definierte Luft- oder Gasmasse pro Zeiteinheit zugeführt werden muss. Eine typische Anwendung findet sich z.B. im Ansaugkanal von Kraftfahrzeug-Verbrennungsmotoren. Hierbei werden die verwendeten Strömungssensoren direkt in die zu messende Strömung eingebracht und von der dieser umströmt. Bekannte Strömungssensoren sind hierbei als Heißfilmsensoren ausgebildet und umfassen verschiedene Sensorwindungen und ggf. Heizerstrukturen, die über übliche Dünnschicht-Fertigungstechnologien auf dünnen Glas- oder Keramiksubstraten aufgebracht werden.

Als problematisch an derartigen Strömungssensoren erweist sich im Einsatz nunmehr zum einen, dass aufgrund der verwendeten dünnen Substrate eine hohe mechanische Empfindlichkeit resultiert. Zum anderen weisen die Strömungssensoren bzw. die Substrate aufgrund der Vereinzelung über einen Sägeprozess bei der Herstellung Kanten auf, an denen sich im Betrieb Schmutz ablagern kann, die zu Fehlmessungen führen.

Zur Lösung dieser Probleme wird in der DE 10 2005 016 122 A1 ein Strömungsmesser vorgeschlagen, bei dem ein Sensorchip ganz oder teilweise mit einer Kunststoffkomponente umgeben wird. Die Kunststoffkomponente kann dabei auch in bestimmten Bereichen des Strömungsmessers als Anströmkante ausgebildet werden. Auf diese Art und Weise lassen sich die oben erwähnten Nachteile im Hinblick auf mechanische Stabilität und Verschmutzung vermeiden, es resultiert aber für einen bestimmten Typ von Sensorelementen eine nicht ideale Umströmung des eigentlichen Sensorelements durch die zu messende Strömung.

Aus der DE 10 2007 055 779 A1 ist eine Halbleitervorrichtung zum Erfassen einer Flussrate von Fluid bekannt, die eine Erwärmungseinrichtung sowie einen Feuchtigkeitssensor aufweist, die auf einem Halbleitersubstrat angeordnet sind. Ein Verkapselungsharz umgibt teilweise den Feuchtigkeitssensor. Die vorgeschlagene Vorrichtung gewährleistet ebenfalls keine ideale Umströmung des Feuchtigkeitssenors.

Die DE 199 41 330 A1 offenbart einen wärmeempfindlichen Flußratensensor, der ein Flußratendetektorgerät aufweist, in welchem ein Heizelement vorgesehen ist. Das Flußratendetektorgerät ist hierbei in einer Ausnehmung eines plattenförmigen Substrats angeordnet, wobei zwischen dem Flußratendetektorgerät und dem Substrat ein Spalt verbleibt. Wiederum ist keine ideale Umströmung des Flußratendetektorgerät gewährleistet; hinzu kommt die Ablagerung von Verschmutzungen im Spalt zwiwschen dem Flußratendetektorgerät und dem Substrat.

Aufgabe der vorliegenden Erfindung ist es, einen Strömungssensor anzugeben, bei dem neben einer möglichst großen mechanischen Stabilität und Verschmutzungsunempfindlichkeit ferner noch eine möglichst gute Umströmung des Sensorelements gewährleistet ist.

Diese Aufgabe wird durch einen Strömungssensor mit den Merkmalen des Anspruchs 1 gelöst.

Vorteilhafte Ausführungsformen des erfindungsgemäßen Strömungssensors ergeben sich aus den Maßnahmen, die in den von Anspruch 1 abhängigen Ansprüchen aufgeführt sind.

Der erfindungsgemäße Strömungssensor zur direkten Messung von Massenströmungen umfasst:
- ein starres, elektrisch leitfähiges Trägerteil,
- ein Sensorelement, welches über elektrisch leitende Verbindungen mit dem Trägerteil verbunden ist, wobei das Sensorelement ein plattenförmiges Trägersubstrat umfasst, auf dem mindestens ein Temperatursensor und ein Heizelement angeordnet sind und
- eine stabile Umkapselung, die das Sensorelement und das Trägerteil teilweise formschlüssig umgibt, wobei Bereiche auf der Ober- und Unterseite des Sensorelements nicht von der Umkapselung bedeckt und von der zu messenden Strömung ungehindert umströmbar sind und
- wobei sich senkrecht zur Längserstreckungsachse des Sensorelements die Umkapselung beidseitig formschlüssig an das Sensorelement anschließt, so dass beidseitig benachbart zum Sensorelement jeweils ein Bereich der Umkapselung als Anströmkante für die zu messende Strömung ausgebildet ist und die beiden Bereiche spiegelsymmetrisch zu einer Symmetrieachse des Strömungssensors ausgebildet sind.

Mit Vorteil erstreckt sich das Sensorelement entlang einer Längsachse des Strömungssensors, wobei senkrecht zur Längsachse mindestens an einer Seite benachbart zum Sensorelement ein Bereich der Umkapselung als Anströmkante für die zu messende Strömung ausgebildet ist.

Hierbei kann die Anströmkante einen gekrümmten Querschnitt aufweisen, so dass die zu messende Strömung am Strömungssensor keine Kante beaufschlagt.

In einer möglichen Ausführungsform ist der nicht von der Umkapselung bedeckte Bereich auf der Ober- und Unterseite des Sensorelements jeweils rechteckförmig ausgebildet und die Längsachse dieses Bereichs erstreckt sich entlang der Längsachse des Strömungssensors.

Es ist möglich, dass in den nicht von der Umkapselung bedeckten Bereichen auf der Ober- und/oder Unterseite des Sensorelements das Heizelement angeordnet ist.

Mit Vorteil umgibt die Umkapselung die elektrisch leitenden Verbindungen zwischen dem Sensorelement und dem Trägerteil.

Vorzugseise sind die elektrisch leitenden Verbindungen als Bondverbindungen mit Bonddrähten ausgebildet.

Es kann vorgesehen sein, dass die Umkapselung Anschlussbereiche des Trägerteils nicht bedeckt, über die der Strömungssensor mit einer nachgeordneten Folgeelektronik elektrisch verbindbar ist.

In einer möglichen Variante ist an einem Längsende des Strömungssensors ein Befestigungselement angeordnet, das zur lösbaren Anordnung des Strömungssensors an einem Halteelement dient.

Als Befestigungselement kann ein in der Umkapselung ausgebildeter Schnapphaken dienen.

Mit Vorteil ist die Umkapselung aus einem gefüllten Epoxidmaterial ausgebildet.

Vorzugsweise besteht das Trägersubstrat des Sensorelements aus einem Material mit geringer Wärmeleitung.

Als Material für das Trägersubstrat kann Glas oder ZrO₂ oder LTCC dienen.

Besonders vorteilhaft am erfindungsgemäßen Strömungssensor erweist sich, dass das verwendete Sensorelement auf beiden Seiten von der zu messenden Strömung umströmt wird. Es ist durch eine geeignete Ausbildung der Anströmkante möglich, die Strömungsführung zum Sensorelement hin dahingehend zu optimieren, dass der Einfluss der Anströmrichtung bzw. des Anströmwinkels minimiert werden kann.

Desweiteren ist aufgrund der vorgesehenen, zumindest teilweisen Umkapselung des Sensorelements eine erhöhte mechanische Stabilität des Strömungssensors gewährleistet; die Bruchgefahr für das dünne Trägersubstrat des Sensorelements während der Montage und im Einsatz kann deutlich minimiert werden.

Ebenso werden über die erfindungsgemäße Ausbildung des Strömungssensors Kanten vermieden, auf die die zu messende Strömung auftrifft und an denen sich Schmutzablagerungen festsetzen können. Dadurch bedingte Fehlmessungen lassen sich somit vermeiden.

Weitere Einzelheiten und Vorteile der vorliegenden Erfindung seien anhand der nachfolgenden Beschreibung eines Ausführungsbeispiels des erfindungsgemäßen Strömungssensors in Verbindung mit den Figuren erläutert.

Es zeigt hierbei
- Figur 1: eine räumliche Ansicht eines Ausführungsbeispiels des erfindungsgemäßen Strömungssensors, angeordnet in einer schematisch angedeuteten Strömung;
- Figur 2: eine Draufsicht auf das Ausführungsbeispiel des erfindungsgemäßen Strömungssensors;
- Figur 3: eine Schnittansicht des Ausführungsbeispiels des erfindungsgemäßen Strömungssensors;
- Figur 4a - 4c: je eine räumliche Schnittdarstellung des Ausführungsbeispiels des erfindungsgemäßen Strömungssensors;
- Figur 5: eine Explosionsdarstellung des Ausführungsbeispiels des erfindungsgemäßen Strömungssensors.

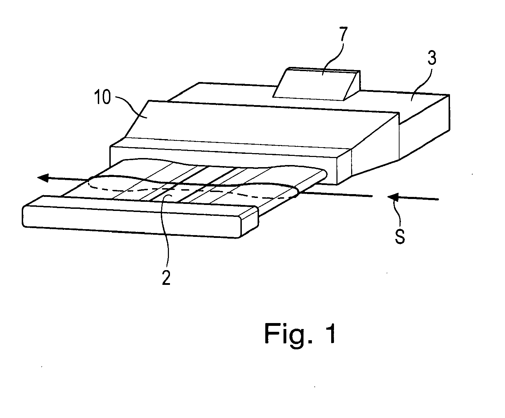

Anhand der Figuren 1 - 5 sei nachfolgend ein Ausführungsbeispiel eines erfindungsgemäßen Strömungssensors im Detail beschrieben.

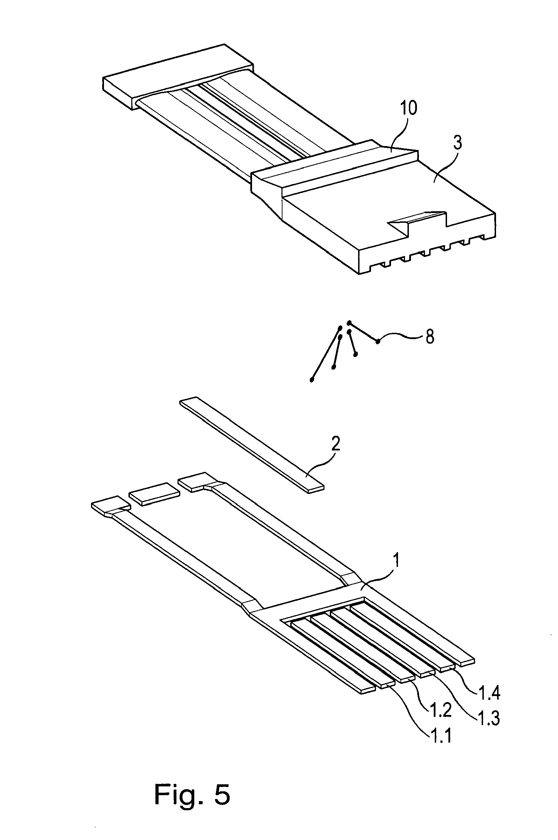

Der erfindungsgemäße Strömungssensor umfasst ein starres Trägerteil 1, das aus einem elektrisch leitfähigen Material besteht. Geeignet hierfür ist beispielsweise Alloy 42 oder andere Materialien, wie sie für sog. Leadframes in elektronischen Bauteilanordnungen eingesetzt werden. Das Trägerteil 1, dessen konkrete Geometrie in der Explosionsdarstellung der Figur 5 ersichtlich ist, dient sowohl zur mechanischen Stabilisierung des Strömungssensors als auch zur elektrischen Verbindung des Sensorelements des Strömungssensors mit einer nicht in den Figuren dargestellten Folgeelektronik.

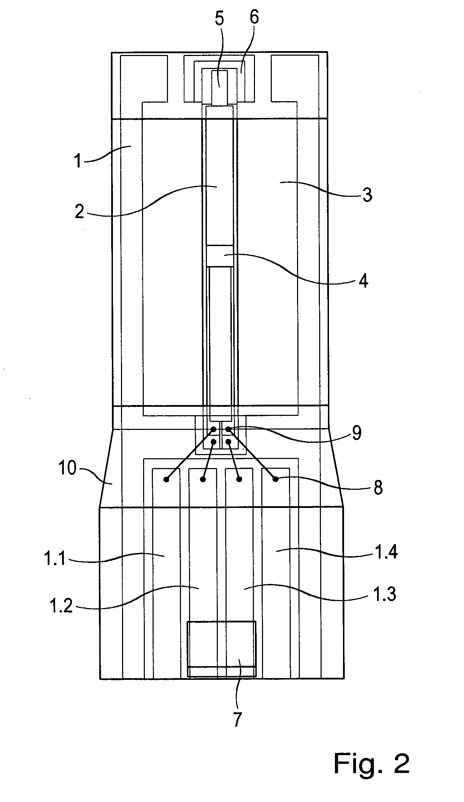

Das Sensorelement zur Messung der Massenströmung wird in den Figuren mit dem Bezugszeichen 2 bezeichnet und umfasst mehrere Komponenten. Hierzu gehört ein sich in Längsrichtung des Strömungssensors erstreckendes plattenförmiges Trägersubstrat 2.1; geeignete Materialien für das Trägersubstrat sind z.B. Glas, Zirkondioxid ZrO₂ oder Keramikmaterialien wie LTCC (Low Temperature Cofired Ceramics). Gemäß der Ansicht in Figur 2 besitzt das Trägersubstrat 2.1 die Form eines länglichen Rechtecks, dessen Längsachse mit der des Strömungssensors zusammenfällt. Auf dem Trägersubstrat 2.1 ist ein Temperatursensor 5 sowie ein Heizelement 4 platziert. Der Temperatursensor 5 als auch das Heizelement 4 werden hierbei durch Leiterbahnen gebildet, die auf dem Trägersubstrat 2.1 angeordnet sind. Das Heizelement 4 und der Temperatursensor 5 sind jeweils mit Kontaktierungsbereichen 9 bzw. Kontaktierungspads verbunden. Über die Kontaktierungsbereiche 9 kann eine elektrisch leitende Verbindung 8 des Heizelements 4 bzw. des Temperatursensors 5 mit fingerförmig ausgebildeten Anschlussbereichen 1.1 - 1.4 des Trägerteils 1 hergestellt werden. Die elektrisch leitenden Verbindungen 8 zwischen den Kontaktierungsbereichen 9 des Sensorelements 2 und dem Trägerteil 1 sind im vorliegenden Ausführungsbeispiel als Bondverbindungen mit Bonddrähten ausgebildet. Über die fingerförmigen Anschlussbereiche 1.1 - 1.4 des Trägerteils 1 kann der Strömungssensor schließlich mit einer - nicht in den Figuren gezeigten - Folgeelektronik verbunden werden.

Das Sensorelement 2 bzw. dessen Trägersubstrat 2.1 wird im dargestellten Ausführungsbeispiel auf das Trägerteil 1 aufgeklebt; der hierzu verwendete Klebstoff 6 ist in Figur 2 angedeutet.

Die eigentliche Massenstrom-Messung erfolgt im erfindungsgemäßen Strömungssensor über ein Heißfilmsensor-Prinzip, bei dem das Sensorelement 2 direkt in die zu messende Strömung eingebracht und vollflächig umströmt wird. Über den Temperatursensor 5 des Sensorelements 2 wird dabei die Temperatur des Gases erfasst, dessen Massenströmung gemessen werden soll. Das Heizelement 4 wird dann auf eine Temperatur oberhalb der gemessenen Temperatur des strömenden Gases aufgeheizt. Die hierzu erforderliche Heizleistung stellt ein Maß für die Massenströmung des Gases dar.

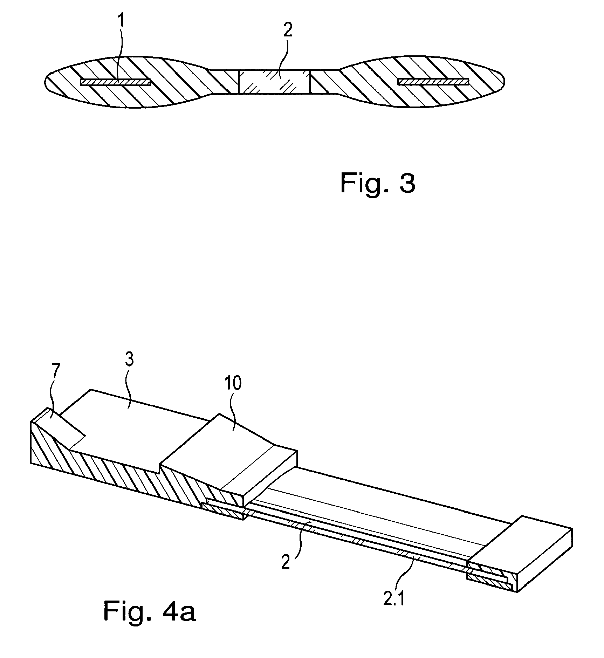

Der erfindungsgemäße Strömungssensor weist ferner eine Umkapselung 3 auf, die das Sensorelement 2 und das Trägerteil 1 teilweise formschlüssig umgibt. Die Umkapselung 3 ist hierbei als sog. Moldmasse ausgebildet und wird in einem Transfermoldingverfahren im Herstellungsprozess mit den anderen Komponenten des Strömungssensors verbunden. Als Material für die Umkapselung 3 kommt etwa ein gefülltes Epoxidharz in Betracht; als Füllstoffe eignen sich z.B. Quarz oder Glas. Maßgeblich in Bezug auf das Sensorelement 2 ist hierbei, dass Bereiche auf der Ober- und Unterseite des Sensorelements 2 nicht von der Umkapselung 3 bedeckt sind und auf diese Art und Weise von der zu messenden Strömung S ungehindert umströmbar sind, wie dies in Figur 1 angedeutet ist. Der nicht von der Umkapselung 3 bedeckte Bereich auf der Ober- und Unterseite des Sensorelements 2 ist im gezeigten Beispiel jeweils rechteckförmig ausgebildet, wobei die Längsachse dieses Bereichs sich entlang der Längsachse des Strömungssensors erstreckt. Hierzu sei auch auf die Schnittdarstellung in Figur 3 verwiesen, aus der ersichtlich ist, dass die Ober- und Unterseite des Sensorelements 2 freibleibend ausgebildet sind und dort keine Umkapselung 3 vorgesehen ist. In den nicht von der Umkapselung bedeckten Bereichen auf der Ober- und/oder Unterseite des Sensorelements 2 ist im vorliegenden Ausführungsbeispiel das Heizelement 4 angeordnet; Wie aus den Figuren ersichtlich ist der endseitig platzierte Temperatursensor 5 von der Moldmasse der Umkapselung 3 bedeckt. Letzteres ist nicht zwingend für die vorliegende Erfindung, d.h. der Temperatursensor könnte auch unbedeckt von der Umkapselung angeordnet werden und damit ebenfalls frei in der Strömung liegen.

Aufgrund einer derartigen Ausbildung der Umkapselung 3 ist gewährleistet, dass die Ober- und Unterseite des Sensorelements 2 von der zu messenden Strömung S wie in Figur 1 gezeigt symmetrisch umströmt werden; eine verbesserte Messung der Massenströmung ist damit möglich. Nochmals optimiert werden kann die Massenstrom-Messung mit dem erfindungsgemäßen Strömungssensor, indem ein - nicht in den Figuren gezeigter - zusätzlicher zylindrischer Körper in der Strömung S vor dem Strömungssensor angeordnet wird. Zur Positionierung eines derartigen Körpers und zur weiteren Optimierung der Strömungsführung kann es ferner vorteilhaft sein, um das Sensorelement 2 noch ein geeignet ausgebildetes Strömungsgehäuse in Form eines aufsetzbaren Strömungskopfes anzuordnen.

Senkrecht zur Längserstreckungsachse des Sensorelements 2 schließt sich die Umkapselung 3 beidseitig formschlüssig an das Sensorelement 2 an. Seitlich benachbart zum Sensorelement 2 sind die Bereiche der Umkapselung 3 als Anströmkanten für die zu messende Strömung S ausgebildet. Im dargestellten Ausführungsbeispiel sind hierbei spiegelsymmetrisch zu einer Symmetrieachse ausgebildete Anströmkanten auf beiden benachbarten Seiten des Sensorelements 2 vorgesehen. Im Bereich des Sensorelements 2 resultiert ein hantelförmiger Querschnitt des Strömungssensors, wie dies in der Schnittansicht der Figur 3 gezeigt ist. Über die geeignete geometrische Ausbildung der Umkapselung 3 im Bereich der Anströmkanten lässt sich somit eine optimierte Strömungsführung im Bereich des Sensorelements 2 sicherstellen, die den Einfluss der Anströmrichtung und des Anströmwinkels bei der Massenstrommessung deutlich minimiert.

Grundsätzlich wäre es aus strömungstechnischer Sicht auch möglich, lediglich auf einer Seite benachbart zum Sensorelement die Umkapselung als Anströmkante auszubilden. Besonders vorteilhaft erweist sich die annähernd symmetrische Ausbildung des Strömungssensors in diesem Bereich jedoch auch deshalb, da damit ggf. resultierende mechanische Verspannungen minimierbar sind, die aufgrund von unterschiedlichen Material-Ausdehnungskoeffizienten auftreten können.

Die derart über die Umkapselung 3 ausgebildeten Anströmkanten für die zu messende Strömung S besitzen jeweils einen gekrümmten Querschnitt, der im vorliegenden Beispiel in etwa elliptisch ausgebildet ist. Die Form entspricht im Profil in etwa einer symmetrisch-ausgebildeten Tragfläche. Derart ist zum einen sichergestellt, dass die zu messende Strömung S am Strömungssensor keine Kante beaufschlagt. Auf diese Art und Weise können störende Schmutzablagerungen im Bereich des Sensorelements 2 und damit eventuelle Fehlmessungen zuverlässig vermieden werden. Zum anderen wird durch eine solche Formgebung der Anströmkanten sichergestellt, dass die zu messende Strömung S gleichmäßig über das Sensorelement 2 streicht, d.h. es wird dadurch vermieden, dass das Sensorelement 2 ggf. im Windschatten eines Hindernisses zu liegen kommt.

Neben der strömungstechnischen Funktionalität der Umkapselung 3 im Bereich der Anströmkanten besitzt die Umkapselung 3 weitere wichtige Funktionen für den erfindungsgemäßen Strömungssensor. So dient die Umkapselung 3 auch als mechanischer und chemischer Schutz für das Sensorelement 2, für die Kontaktierungsbereiche 9 des Sensorelements 2, für die elektrischen Verbindungen 8 und für das Trägerteil 1.

Die Umkapselung 3 besitzt zudem etwa in der Mitte des Strömungssensors einen Positionierungsabschnitt 10 mit einer leicht konischen Formgebung. Auf diese Art und Weise ist eine geführte und reproduzierbare Montage des erfindungsgemäßen Strömungssensors in der jeweiligen Anwendung möglich, wo ein geometrisch entsprechend ausgebildetes Gegenstück vorhanden ist. Eventuelle Positionierungsfehler bei der Montage lassen sich derart vermeiden. Die seitlich vorgesehenen schrägen Flächen des Positionierungsabschnitts 10 können bei geeigneter Ausbildung des Gegenstücks desweiteren als Dichtflächen verwendet werden.

An einem Längsende des Strömungssensors ist desweiteren ein Befestigungselement 7 vorgesehen, das zur lösbaren Anordnung des Strömungssensors an einem geeigneten - in den Figuren nicht dargestellten - Halteelement dient. Im vorliegenden Ausführungsbeispiel ist das Befestigungselement 7 als in der Umkapselung 3 ausgebildeter Schnapphaken realisiert. Der Strömungssensor kann somit z.B. in einen geeigneten Sockel gesteckt und fixiert werden.

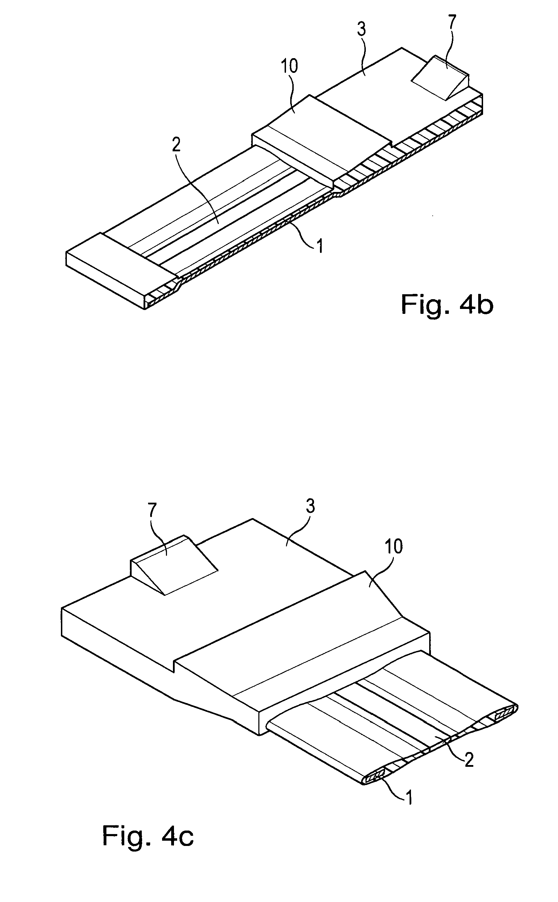

Wie etwa aus den Figuren 4b und 5 ersichtlich, ist die Umkapselung 3 im Bereich der fingerförmigen Anschlussbereiche 1.1 - 1.4 des Trägerteils 1 nur oberhalb dieser Anschlussbereiche 1.1 - 1.4 vorgesehen. Das heißt, nach unten liegen die Anschlussbereiche 1.1 - 1.4 des Trägerteils 1 frei und können zur elektrischen Verbindung des erfindungsgemäßen Strömungssensors mit einer Folgeelektronik genutzt werden. Eine entsprechende Kontaktierung kann z.B. über ein Flachbandkabel erfolgen, das über einen Reflow-Lötprozess an die Kontaktierungsbereiche 1.1 - 1.4 angelötet wird.

Bei der Wahl der verschiedenen Materialien für den erfindungsgemäßen Strömungssensor ist grundsätzlich darauf zu achten, dass Materialien mit geringer Wärmeleitung bzw. Wärmeleitzahl λ und geringer Wärmekapazität c gewählt werden. Die entsprechenden Parameter aller verwendeten Materialien sind hierbei geeignet aufeinander abzustimmen. Desweiteren erweist sich als vorteilhaft, wenn sich die verwendeten Materialien hinsichtlich ihrer jeweiligen Wärmeausdehnungskoeffizienten CTE nicht zu stark unterscheiden.

Die entsprechenden Parameter-Größenordnungen für die potentiellen Trägersubstratmaterialien Glas, Zirkondioxid, das Trägerteilmaterial Alloy 42 und ein geeignetes Umkapselungsmaterial (Moldmasse) sind in der nachfolgenden Tabelle zusammengestellt.

| | Glas | ZrO2 | Alloy 42 | Moldmasse |
|---|---|---|---|---|
| CTE [µm/K] | 7 | 10 | 5 | 10 |
| Wärmeleitung λ [W/Km] | 1 | 2 | 10 | 1 |
| Wärmekapazität c [J/gK] | 0,8 | 0,5 | 0,5 | 0,8 |

Zur Fertigung des erfindungsgemäßen Strömungssensors wird zunächst das Sensorelement 2 auf das Trägerteil 1 aufgeklebt. Im Anschluss werden über einen geeigneten Bondprozess die Bondverbindungen hergestellt und in einem abschließenden Schritt erfolgt das Transfermolding.

Neben den erläuterten Beispielen existieren im Rahmen der vorliegenden Erfindung selbstverständlich noch weitere Ausgestaltungsmöglichkeiten.

So wäre es etwa möglich, anstelle des im beschriebenen Beispiel vorgesehenen einzigen Trägersubstrats 2.1 des Sensorelements 2 das Trägerelement mehrteilig auszubilden. So könnte z.B. auf einem länglichen ersten Trägersubstrat das Heizelement angeordnet werden und auf einem daneben platzierten zweiten Trägersubstrat den Temperatursensor. Im Bereich zwischen den beiden Trägersubstraten wäre dann wieder die Umkapselung bzw. Moldmasse angeordnet etc..

## Patentansprüche

1. Strömungssensor zur direkten Messung von Massenströmungen mit
- einem starren, elektrisch leitfähigen Trägerteil (1),
- einem Sensorelement (2), welches über elektrisch leitende Verbindungen (8) mit dem Trägerteil (1) verbunden ist, wobei das Sensorelement (2) ein plattenförmiges Trägersubstrat (2.1) umfasst, auf dem mindestens ein Temperatursensor (5) und ein Heizelement (4) angeordnet sind und
- einer stabilen Umkapselung (3), die das Sensorelement (2) und das Trägerteil (1) teilweise formschlüssig umgibt, wobei Bereiche auf der Ober- und Unterseite des Sensorelements (2) nicht von der Umkapselung (3) bedeckt und von der zu messenden Strömung (S) ungehindert umströmbar sind und
- senkrecht zur Längserstreckungsachse des Sensorelements (2) sich die Umkapselung (3) beidseitig formschlüssig an das Sensorelement (2) anschließt, so dass beidseitig benachbart zum Sensorelement (2) jeweils ein Bereich der Umkapselung (3) als Anströmkante für die zu messende Strömung (S) ausgebildet ist und die beiden Bereiche spiegelsymmetrisch zu einer Symmetrieachse des Strömungssensors ausgebildet sind.

2. Strömungssensor nach Anspruch 1, wobei das Sensorelement (2) sich entlang einer Längsachse des Strömungssensors erstreckt und senkrecht zur Längsachse mindestens an einer Seite benachbart zum Sensorelement (2) ein Bereich der Umkapselung (3) als Anströmkante für die zu messende Strömung (S) ausgebildet ist.

3. Strömungssensor nach Anspruch 2, wobei die Anströmkante einen gekrümmten Querschnitt aufweist, so dass die zu messende Strömung (S) am Strömungssensor keine Kante beaufschlagt.

4. Strömungssensor nach mindestens einem der vorhergehenden Ansprüche, wobei der nicht von der Umkapselung (3) bedeckte Bereich auf der Ober- und Unterseite des Sensorelements (2) jeweils rechteckförmig ausgebildet ist und die Längsachse dieses Bereichs sich entlang der Längsachse des Strömungssensors erstreckt.

5. Strömungssensor nach mindestens einem der vorhergehenden Ansprüche, wobei in den nicht von der Umkapselung (3) bedeckten Bereichen auf der Ober- und/oder Unterseite des Sensorelements (2) das Heizelement (4) angeordnet ist.

6. Strömungssensor nach mindestens einem der vorhergehenden Ansprüche, wobei die Umkapselung (3) die elektrisch leitenden Verbindungen (8) zwischen dem Sensorelement (2) und dem Trägerteil (1) umgibt.

7. Strömungssensor nach Anspruch 6, wobei die elektrisch leitenden Verbindungen (8) als Bondverbindungen mit Bonddrähten ausgebildet sind.

8. Strömungssensor nach mindestens einem der vorhergehenden Ansprüche, wobei die Umkapselung (3) Anschlussbereiche (1.1 - 1.4) des Trägerteils (1) nicht bedeckt, über die der Strömungssensor mit einer nachgeordneten Folgeelektronik elektrisch verbindbar ist.

9. Strömungssensor nach mindestens einem der vorhergehenden Ansprüche, wobei an einem Längsende des Strömungssensors ein Befestigungselement (7) angeordnet ist, das zur lösbaren Anordnung des Strömungssensors an einem Halteelement dient.

10. Strömungssensor nach Anspruch 9, wobei als Befestigungselement (7) ein in der Umkapselung (3) ausgebildeter Schnapphaken dient.

11. Strömungssensor nach mindestens einem der vorhergehenden Ansprüche, wobei die Umkapselung (3) aus einem gefüllten Epoxidmaterial ausgebildet ist.

12. Strömungssensor nach mindestens einem der vorhergehenden Ansprüche, wobei das Trägersubstrat (2.1) des Sensorelements (2) aus einem Material mit geringer Wärmeleitung besteht.

13. Strömungssensor Anspruch 12, wobei als Material für das Trägersubstrat (2.1) Glas oder ZrO₂ oder LTCC dient.

## Claims

1. Flow sensor for the direct measurement of mass flows, comprising
- a rigid, electrically conductive carrier part (1),
- a sensor element (2), which is connected to the carrier part (1) via electrically conductive connections (8), wherein the sensor element (2) comprises a plate-like carrier substrate (2.1) on which at least one temperature sensor (5) and a heating element (4) are arranged, and
- a stable encapsulation (3), which partly surrounds the sensor element (2) and the carrier part (1) with a form fit, wherein areas on the upper and lower side of the sensor element (2) are not covered by the encapsulation (3) and the flow (S) to be measured can flow unimpeded around said areas,
- at right angles to the axis of longitudinal extent of the sensor element (2), the encapsulation (3) adjoins the sensor element (2) on both sides with a form fit, so that on both sides adjacent to the sensor element (2) in each case an area of the encapsulation (3) is formed as a leading edge for the flow (S) to be measured, and the two areas are formed mirror-symmetrically in relation to an axis of symmetry of the flow sensor.

2. Flow sensor according to Claim 1, wherein the sensor element (2) extends along a longitudinal axis of the flow sensor and, at right angles to the longitudinal axis, at least on one side adjacent to the sensor element (2), an area of the encapsulation (3) is formed as a leading edge for the flow (S) to be measured.

3. Flow sensor according to Claim 2, wherein the leading edge has a curved cross section, so that the flow (S) to be measured does not act on any edge on the flow sensor.

4. Flow sensor according to at least one of the preceding claims, wherein the area not covered by the encapsulation (3) on the upper and lower side of the sensor element (2) is respectively formed in the shape of a rectangle, and the longitudinal axis of this area extends along the longitudinal axis of the flow sensor.

5. Flow sensor according to at least one of the preceding claims, wherein the heating element (4) is arranged in the areas on the upper and/or lower side of the sensor element (2) that are not covered by the encapsulation (3).

6. Flow sensor according to at least one of the preceding claims, wherein the encapsulation (3) surrounds the electrically conductive connections (8) between the sensor element (2) and the carrier part (1).

7. Flow sensor according to Claim 6, wherein the electrically conductive connections (8) are formed as bonding connections with bonding wires.

8. Flow sensor according to at least one of the preceding claims, wherein the encapsulation (3) does not cover connecting areas (1.1 - 1.4) of the carrier part (1), via which the flow sensor can be connected electrically to following electronics downstream.

9. Flow sensor according to at least one of the preceding claims, wherein at one longitudinal end of the flow sensor there is arranged a fixing element (7), which serves for the detachable arrangement of the flow sensor on a holding element.

10. Flow sensor according to Claim 9, wherein the fixing element (7) used is a snap-in hook formed in the encapsulation (3).

11. Flow sensor according to at least one of the preceding claims, where the encapsulation (3) is formed from a filled epoxy material.

12. Flow sensor according to at least one of the preceding claims, wherein the carrier substrate (2.1) of the sensor element (2) consists of a material with low thermal conduction.

13. Flow sensor according to Claim 12, wherein the material used for the carrier substrate (2.1) is glass or ZrO₂ or LTCC.

## Revendications

1. Détecteur de flux destiné à la mesure directe de flux massiques, comprenant
- une partie porteuse (1) rigide, électriquement conductrice,
- un élément de détection (2) qui est relié à la partie porteuse (1) par le biais de liaisons électriquement conductrices (8), l'élément de détection (2) comprenant un substrat porteur (2.1) en forme de plaque sur lequel sont disposés au moins une sonde de température (5) et un élément chauffant (4) et
- une encapsulation (3) stable qui entoure partiellement par complémentarité de formes l'élément de détection (2) et la partie porteuse (1), des zones sur le côté supérieur et le côté inférieur de l'élément de détection (2) n'étant pas recouvertes par l'encapsulation (3) et pouvant être contournées sans entrave par l'écoulement du flux (S) à mesurer et
- l'encapsulation (3) se rattache par complémentarité de formes des deux côtés à l'élément de détection (2), perpendiculairement à l'axe de projection longitudinal de l'élément de détection (2), de sorte que des deux côtés, dans le voisinage de l'élément de détection (2), une zone de l'encapsulation (3) est respectivement réalisée sous la forme d'un bord d'attaque d'écoulement pour le flux (S) à mesurer et les deux zones sont configurées en symétrie à réflexion par rapport à un axe de symétrie du détecteur de flux.

2. Détecteur de flux selon la revendication 1, l'élément de détection (2) s'étendant le long d'un axe longitudinal du détecteur de flux et une zone de l'encapsulation (3), perpendiculaire à l'axe longitudinal et voisine de l'élément de détection (2) au moins d'un côté, étant réalisée sous la forme d'un bord d'attaque d'écoulement pour le flux (S) à mesurer.

3. Détecteur de flux selon la revendication 2, le bord d'attaque d'écoulement possédant une section transversale curviligne, de sorte que le flux (S) à mesurer ne charge aucun bord au niveau du détecteur de flux.

4. Détecteur de flux selon au moins l'une des revendications précédentes, la zone non recouverte par l'encapsulation (3) sur le côté supérieur et le côté inférieur de l'élément de détection (2) étant respectivement de configuration rectangulaire et l'axe longitudinal de cette zone s'étendant le long de l'axe longitudinal du détecteur de flux.

5. Détecteur de flux selon au moins l'une des revendications précédentes, l'élément chauffant (4) étant disposé dans la zone non recouverte par l'encapsulation (3) sur le côté supérieur et le côté inférieur de l'élément de détection (2).

6. Détecteur de flux selon au moins l'une des revendications précédentes, l'encapsulation (3) entourant les liaisons (8) électriquement conductrices entre l'élément de détection (2) et la partie porteuse (1).

7. Détecteur de flux selon la revendication 6, les liaisons (8) électriquement conductrices étant réalisées sous la forme de liaisons de connexion avec des fils de connexion.

8. Détecteur de flux selon au moins l'une des revendications précédentes, l'encapsulation (3) ne recouvrant pas les zones de raccordement (1.1 - 1.4) de la partie porteuse (1) par le biais desquelles le détecteur de flux peut être relié électriquement à une électronique séquentielle disposée en aval.

9. Détecteur de flux selon au moins l'une des revendications précédentes, un élément de fixation (7) étant disposé à une extrémité longitudinale du détecteur de flux, lequel sert au montage amovible du détecteur de flux à un élément de maintien.

10. Détecteur de flux selon la revendication 9, un crochet à déclic formé dans l'encapsulation (3) faisant office d'élément de fixation (7).

11. Détecteur de flux selon au moins l'une des revendications précédentes, l'encapsulation (3) étant formée à partir d'un matériau époxy rempli.

12. Détecteur de flux selon au moins l'une des revendications précédentes, le substrat porteur (2.1) de l'élément de détection (2) étant constitué d'un matériau à faible conduction thermique.

13. Détecteur de flux selon la revendication 12, le matériau pour le substrat porteur (2.1) étant du verre ou du ZrO₂ ou du LTCC.
